(19) Europäisches Patentamt
European Patent Office
Office européen des brevets

(11) Veröffentlichungsnummer : **0 207 432**
**B1**

(12) # EUROPÄISCHE PATENTSCHRIFT

(45) Veröffentlichungstag der Patentschrift : **07.09.88**

(51) Int. Cl.⁴ : **C 07 F 9/50**

(21) Anmeldenummer : **86108629.6**

(22) Anmeldetag : **25.06.86**

(54) **Reduktion von tertiären Phosphinoxiden, -sulfiden oder -dihalogeniden mit Kohlenwasserstoffen.**

(30) Priorität : **29.06.85 DE 3523320**

(43) Veröffentlichungstag der Anmeldung : **07.01.87 Patentblatt 87/02**

(45) Bekanntmachung des Hinweises auf die Patenterteilung : **07.09.88 Patentblatt 88/36**

(84) Benannte Vertragsstaaten : **BE CH DE FR GB IT LI NL**

(56) Entgegenhaltungen :
**DE-A- 2 516 361**
**US-A- 4 113 783**

(73) Patentinhaber : **BASF Aktiengesellschaft**
**Carl-Bosch-Strasse 38**
**D-6700 Ludwigshafen (DE)**

(72) Erfinder : **Dockner, Toni, Dr.**
**Grossgasse 6**
**D-6701 Meckenheim (DE)**

**EP 0 207 432 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Reduktion von tertiären Phosphinoxiden, -sulfiden und/oder Phosphindihalogeniden zu tertiären Phosphinen.

Tertiäre Phosphinoxide gehören zu den stabilsten Verbindungen des Phosphors und setzen Reduktionsmitteln außerordentlich hohen Widerstand entgegen. Die katalytische Hydrierung oder die Reduktion mit elementaren Metallen ist nicht möglich. Tributylphosphinoxid verändert sich z. B. erst in der Natriumschmelze bei 300 bis 360 °C unter gleichzeitigem Verlust eines Alkylrestes in Dibutylphosphin. Aromatische Phosphinoxide bilden mit Alkalimetallen den Metallketylen analoge gefärbte Produkte, die bei erhöhter Temperatur in Alkalisalze von Phosphinigsäure übergehen. Will man tertiäre Phosphinoxide reduzieren, wird daher empfohlen, sie zunächst in Phosphindihalogenide oder Phosphinsulfide zu überführen in dem man sie z. B. mit Phosphorpentachlorid, mit Thionylchlorid oder mit Schwefeltetrafluorid umsetzt und gegebenenfalls die so zugänglichen Dihalogenide mit Schwefelwasserstoff weiter zu den Phosphinsulfiden umsetzt. Beide Zwischenprodukte lassen sich z. B. mit elementaren Metallen in die tertiären Phosphine umwandeln. (Houben-Weyl, Methoden der Org. Chemie, Bd. 12/1, S. 58, 129 und 168, 1962.)

Die direkte Reduktion zu tertiären Phosphinen gelingt lediglich mit komplexen Hydriden, z. B. Lithiumaluminiumhydrid (loc. cit. S. 61) bei erhöhter Temperatur. Aromatische Phosphinoxide neigen dabei zur Abspaltung eines Arylrestes, so daß sekundäre Phosphine als Nebenprodukt entstehen. Triphenylphosphinoxid läßt sich nach der US-PS 4 113 783 und Umsetzung mit Dialkylaluminiumhydrid und anschließende basische Hydrolyse in Triphenylphosphin überführen.

Die Bildung von tertiären Phosphinoxiden, insbesondere Triphenylphosphinoxid spielt z. B. bei der Wittig-Reaktion (Merck-Index, 10. ed. 1983, ONR-96) zur Synthese von Olefinen durch Umsetzung von Carbonylverbindungen mit Alkylentriphenylphosphoranen (Yliden) eine Rolle (s. auch Ullmann's Enzyklopädie d. techn. Chemie, 4. Aufl., Bd. 18, S. 382 und 383, 1979). Dem hohen präparativen Wert dieser Reaktion steht gegenüber, daß große Mengen an Triphenylphosphinoxid anfallen, die auf umständlichem Wege z. B. über die Phosphindihalogenide in die Phosphine überführt werden oder entsorgt werden müssen.

Der Erfindung lag daher die Aufgabe zugrunde, ein Verfahren zu finden, das es gestattet, tertiäre Phosphinoxide oder die daraus erhältlichen Dihalogenide oder Phosphinsulfide auf billige Weise und in technisch durchführbarem Maßstab in das tertiäre Phosphin zu überführen.

In Verfolgung dieser Aufgabe wurde überraschenderweise ein einfaches Verfahren zur Reduktion von tertiären Phosphinoxiden, -sulfiden und/oder Phosphindihalogeniden zu tertiären Phosphinen gefunden, gemäß dem man organische Phosphorverbindungen der allgemeinen Formel I

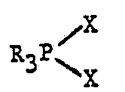

(I)

in der X jeweils für ein Halogenatom oder beide X zusammen für eine Oxooder Thiogruppe stehen und die Reste R aliphatische, cycloaliphatische, araliphatische oder aromatische Reste bedeuten, mit Kohlenwasserstoffen in Gegenwart von Kohlenstoff erhitzt.

Das erfindungsgemäße Verfahren wird z. B. durch folgende Reaktionsgleichungen beschrieben.

(1)

$$R_3P{=}O + C_nH_{2n+2} \xrightarrow{[C]} R_3P + C_nH_{2n} + H_2O$$

(2)

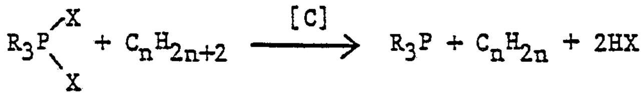


X = Halogen

Der für die Bildung von $H_2O$ bzw. HX benötigte Wasserstoff entstammt dem Kohlenwasserstoff, aus dem neben wasserstoffärmeren Derivaten häufig Kohlenstoff als Endprodukt gebildet wird.

Als Reste R kommen aliphatische, cycloaliphatische, araliphatische und aromatische Reste in Betracht, z. B. Alkylreste wie Methyl-, Ethyl-, n-Propyl-, i-Propyl, n- und iso-Butyl-, Pentyl-, Octyl- und höhere Alkylreste, die auch Doppel- oder Dreifachbindungen enthalten können. Weiterhin Cycloalkylreste insbesondere mit 5 bis 6 Kohlenstoffatomen wie Cyclohexylreste oder Aralkyl-, Alkylaryl, Aralkenyl- oder Aralkinylreste, z. B. Benzyl- oder Phenylethylreste. Besonders vorteilhaft können nach dem erfindungsgemäßen Verfahren Triaryl-substituierte Phosphorverbindungen umgesetzt werden, z. B. Triphenylphosphinoxid, Triphenylphosphinsulfid, Triphenyldichlor- oder Triphenyldibromphosphin. Die Phenylreste können noch unter den Reaktionsbedingungen inerte Substituenten tragen, z. B. Alkyl-, Alkoxy-, Dialkylamino- oder Cyanogruppen.

Als Ausgangsstoffe der Formel (I) in Betracht kommende Phosphindihalogenide sind solche, in denen als Halogen Jod, Fluor und insbesondere Chlor oder Brom vorliegt.

Als Kohlenwasserstoffe werden zweckmäßig hochsiedende Mineralöle verwendet, deren Siedetemperaturen höher liegen als die Reaktionstemperatur, die 150 bis 500 °C beträgt. Für die Reduktion von Dihalogenverbindungen der Formel I oder tertiären Phosphinsulfiden sind im allgemeinen niedrige Temperaturen von 150 bis 400 °C erforderlich, während die Temperatur bei tertiären Phosphinoxiden im oberen Bereich, insbesondere bei 250 bis 450 °C liegt. Solche Kohlenwasserstoffe sind z.B. Vakuum-Gasöl, technisches Weißöl, Heizöl S, Vakuumrückstandsöl oder sonstige bei der Erdölfraktionierung anfallende hochsiedende Bestandteile. Es ist auch möglich, niedrigsiedende Kohlenwasserstoffe wie Heizöl L, Benzin, Leichtbenzin, Cyclohexan, $C_4$-Schnitt oder Erdgas zu verwenden (siehe dazu Ullmann, Enzyklopädie d. techn. Chemie, 3. Aufl., Bd. 6, S. 595 bis 760, 1955 und 4. Aufl., Bd. 12, S. 570 bis 573). Allerdings muß dann die Reaktion unter Druck durchgeführt werden. Rohöle verschiedener Herkunft sind ebenso einsetzbar.

Die Kohlenwasserstoffe werden in der Regel in einer Menge von 100 bis 3 000 g, insbesondere 300 bis 2 000 g pro Mol Phosphinoxid, -sulfid bzw. Phosphindihalogenide verwendet. Die Reaktion wird vorzugsweise in flüssiger Phase durchgeführt, wobei mindestens der Hauptteil der reagierenden Kohlenwasserstoffe flüssig vorliegen muß. Die flüssige Phase enthält Kohlenstoff, in der Regel in suspendierter Form, der entweder als Bestandteil der Kohlenwasserstoffe vorhanden ist oder dem Reaktionsgemisch zugesetzt wird. Bei Heizöl S oder Vakuumrückstand ist z. B. ein Zusatz nicht erforderlich, da beide einen beträchtlichen Anteil Ruß enthalten. Auf einen Kohlenstoffzusatz kann ebenfalls verzichtet werden, wenn man Dihalogenide umsetzt, da sofort zu Beginn der Reaktion Kohlenstoff gebildet wird.

Für die Umsetzung in Betracht kommende Kohlenstoffzusätze sind z. B. Ruß oder Petrolkoks. Besonders vorteilhaft verwendet man Aktivkohlen. Vorzugsweise liegen im Reaktionsgemisch 1-50, insbesondere 5 bis 20 Gew.-% Kohlenstoff bezogen auf den Kohlenwasserstoff vor. Die Reaktion wird kontinuierlich oder diskontinuierlich nach den dafür üblichen Techniken bei erhöhtem oder vermindertem Druck, insbesondere bei Normaldruck durchgeführt.

Zweckmäßig erfolgt die Umsetzung in der Weise, daß man zu einer Suspension von Kohlenstoff in Kohlenwasserstoff die zu reduzierende tertiäre Phosphorverbindung der allgemeinen Formel I fest, flüssig oder gasförmig, gegebenenfalls zusammen mit einem Inertgas, z. B. Stickstoff dem Reaktor mit der auf Reaktionstemperatur erhitzten flüssigen Kohlenwassertoffphase zuführt. Während der Umsetzung wird vorteilhaf ein Inertgas durch das Reaktionsgemisch geleitet und das sich bildende Reaktionswasser bzw. der Halogenwasserstoff oder Schwefelwasserstoff kontinuierlich z. B. durch Destillation entfernt. Die Isolierung des Reaktionsproduktes aus dem Reaktionsgemisch erfolgt nach den dafür üblichen Techniken je nach Siedepunkt des tertiären Phosphins z. B. durch Destillation oder durch Extraktion.

Nach dem erfindungsgemäßen Verfahren ist es überraschenderweise auf billige und technisch einfache Art möglich, tertiäre Phosphinoxide direkt zu den entsprechenden Phosphinen zu reduzieren, so daß die z. B. bei der Wittig-Reaktion als Abfallprodukt anfallende Phosphorverbindungen nach der Reduktion wieder leicht in den Prozeß zurückgeführt werden können.

## Beispiel 1

In einem Rührkolben wurden 250 g technisches Weißöl und 25 g pulverisierte Aktivkohle vorgelegt und auf 350 °C erhitzt. In dieses Reaktionsmedium wurden 27,8 g Triphenylphosphinoxid gegeben und gleichzeitig ein schwacher Stickstoffstrom von 5 l $N_2$/h durchgeleitet. Das sich bildende Reaktionswasser wurde kontinuierlich abdestilliert. Nach 6 h war die Umsetzung beendet, und es hatten sich 0,8 g $H_2O$ in der Vorlage angesammelt.

Das Reaktionsgemisch wurde auf Raumteperatur abgekühlt und 5 x mit je 100 ml Eisessig extrahiert. Nach dem Abdampfen der Essigsäure erhielt man 28,7 g kristallinen Rückstand, der 13,3 g unumgesetztes Triphenylphosphinoxid, 9,2 g Triphenylphosphin und Essigsäure enthielt. Der Umsatz beträgt 52 % bei einer Selektivität von 68 %.

## Beispiel 2

250 g technisches Weißöl wurden in einen Rührkolben eingefüllt und unter $N_2$-Spülung mit 33 g (0,1 mol) Triphenylphosphindichlorid versetzt. Das Reaktionsgemisch wurde unter Rühren auf 300 °C aufgeheizt und 5 h bei dieser Temperatur gehalten. Anschließend wurde noch 1 h auf 305 °C erhitzt. Während der Umsetzung wurde trockener Stickstoffstrom von ca. 6 l/h durch das Reaktionsgemisch geleitet.

Nach Destillation bei 0,5 mbar bei einer Sumpftemperatur bis 240 °C und einer übergangstemperatur von 70-220 °C erhielt man 151 g Destillat. Die gaschromatographische Analyse des Destillats ergibt 14,1 Gew.-% Triphenylphosphin und 1,9 Gew.-% nicht umgesetzes Triphenylphosphindichlorid. Das entspricht

einem Umsatz von 91,2 % bei einer Selektivität von 89,9 %.

**Patentansprüche**

1. Verfahren zur Reduktion von tertiären Phosphinoxiden, -sulfiden und/oder Phosphindihalogeniden zu tertiären Phosphinen, dadurch gekennzeichnet, daß man die organischen Phosphorverbindungen der allgemeinen Formel I

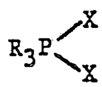

(I)

in der X jeweils für ein Halogenatom oder beide X zusammen für eine Oxo- oder Thiogruppe stehen und die Reste R aliphatische, cycloaliphatische, araliphatische oder aromatische Reste bedeuten, mit Kohlenwasserstoffen in Gegenwart von Kohlenstoff erhitzt.

2. Verfahren nach Anspruch 1, dadurch gekennzeichnet, daß man als Kohlenwasserstoffe hochsiedende Mineralöle wie Vakuumgasöl, Heizöl S, Vakuumrückstand oder technisches Weißöl verwendet.

3. Verfahren nach Anspruch 1, dadurch gekennzeichnet, daß man niedrig siedende Kohlenwasserstoffe wie Heizöl L, Benzin, Leichtbenzin, Cyclohexan oder Flüssiggas verwendet und die Umsetzung bei erhöhtem Druck durchführt.

4. Verfahren nach Anspruch 1, dadurch gekennzeichnet, daß man die Umsetzung in Gegenwart von Aktivkohle, Ruß oder Petrolkoks durchführt.

5. Verfahren nach Anspruch 1, dadurch gekennzeichnet, daß man 1 bis 50 Gew.-% Kohlenstoff bezogen auf den Kohlenwasserstoff verwendet.

6. Verfahren nach Anspruch 1, dadurch gekennzeichnet, daß man die Umsetzung in flüssigen Kohlenwasserstoffen durchführt.

7. Verfahren nach Anspruch 1, dadurch gekennzeichnet, daß man die Umsetzung bei Temperaturen von 150 bis 500 °C durchführt.

**Claims**

1. A process for the reduction of tertiary phosphine oxides, phosphine sulfides and/or phosphine dihalides to tertiary phosphines, wherein an organic phosphorus compound of the formula I

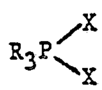

(I)

where each radical X is halogen or the two radicals X together represent an oxo or thio group and R is an aliphatic, cycloaliphatic, araliphatic or aromatic radical, is heated with a hydrocarbon in the presence of carbon.

2. A process as claimed in claim 1, wherein the hydrocarbon used is a high boiling mineral oil, such as vacuum gas oil, heavy fuel oil, a vacuum residue or technicalgrade white oil.

3. A process as claimed in claim 1, wherein a low boiling hydrocarbon, such as light fuel oil, gasoline, naphtha, cyclohexane or liquefied gas, is used, and the reaction is carried out under superatmospheric pressure.

4. A process as claimed in claim 1, wherein the reaction is carried out in the presence of active carbon, carbon black or petroleum coke.

5. A process as claimed in claim 1, wherein carbon is used in an amount of from 1 to 50 % by weight, based on the hydrocarbon.

6. A process as claimed in claim 1, wherein the reaction is carried out in a liquid hydrocarbon.

7. A process as claimed in claim 1, wherein the reaction is carried out at from 150 to 500 °C.

**Revendications**

1. Procédé pour la réduction d'oxydes, sulfures et/ou dihalogénures de phosphines tertiaires pour l'obtention de phosphines tertiaires, caractérisé en ce qu'on chauffe avec des hydrocarbures, en présence de carbone, les composés organiques du phosphore de formule générale I

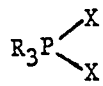

(I)

dans laquelle chacun des symboles X est mis pour un atome d'halogène où ils sont mis tous les deux ensemble pour un groupe oxo ou thio, et les symboles R représentent des radicaux aliphatiques, cycloaliphatiques, araliphatiques ou aromatiques.

2. Procédé selon la revendication 1, caractérisé en ce qu'on utilise, comme hydrocarbures, des huiles minérales de point d'ébullition élevé, telles que le gazole obtenu sous vide, le fuel lourd (S), le résidu court de la distillation poussée ou l'huile blanche technique.

3. Procédé selon la revendication 1, caractérisé en ce qu'on utilise des hydrocarbures de bas point d'ébullition tels que le fuel léger (L), l'essence, le white-spirit, le cyclohexane ou le gaz combustible liquéfié, et on conduit la réaction sous pression élevée.

4. Procédé selon la revendication 1, caractérisé en ce qu'on conduit la réaction en présence de charbon actif, de noir de fumée ou de coke de pétrole.

5. Procédé selon la revendication 1, caractérisé en ce qu'on utilise 1 à 50 % en poids de carbone sur la base de l'hydrocarbure.

6. Procédé selon la revendication 1, caractérisé en ce qu'on conduit la réaction dans des hydrocarbures liquides.

7. Procédé selon la revendication 1, caractérisé en ce qu'on conduit la réaction à des températures de 150 à 500 °C.